Europäisches Patentamt

(19) European Patent Office

Office européen des brevets

(11) **EP 0 823 794 A1**

(12) **EUROPEAN PATENT APPLICATION**
published in accordance with Art. 158(3) EPC

(43) Date of publication:
**11.02.1998 Bulletin 1998/07**

(51) Int. Cl.[6]: **H04B 7/04, H04H 3/00,**
**H04J 11/00, H04L 27/00**

(21) Application number: **97900117.9**

(22) Date of filing: **10.01.1997**

(86) International application number:
**PCT/JP97/00033**

(87) International publication number:
**WO 97/25784 (17.07.1997 Gazette 1997/31)**

(84) Designated Contracting States:
**DE DK ES FR GB SE**

(30) Priority: **10.01.1996 JP 2265/96**
**21.03.1996 JP 64803/96**

(71) Applicants:
• **Advanced Digital Television Broadcasting**
**Laboratory**
**Tokyo 107 (JP)**
• **Fuji Television Network, Inc.**
**Shinjuku-ku, Tokyo 162 (JP)**

(72) Inventors:
• **HIRONO, Jiro,**
**Advanced Digital Television**
**Minato-ku, Tokyo 107 (JP)**
• **SAITO, Masafumi,**
**Advanced Digital Television**
**Minato-ku, Tokyo 107 (JP)**
• **KAMISE, Chiharu,**
**Fuji Television Network, Inc.**
**Shinjuku-ku, Tokyo 162 (JP)**

(74) Representative:
**Marles, Alan David**
**Stevens, Hewlett & Perkins**
**1 St Augustine's Place**
**Bristol BS1 4UD (GB)**

(54) **OFDM SYSTEM AND OFDM APPARATUS**

(57) In an OFDM broadcasting network system using a dispersive transmission method, transmission frequencies of transmission stations (non-reference transmission stations) are displaced from a transmission frequency (reference frequency) of another transmission station (reference transmission station) by $\Delta f_1$ and $\Delta f_2$ and then transmitted. In this case, even if frequency characteristics of a reception electric field at a given point within a service area have such a relationship as to cancel each other at some time point, the vectors of two non-reference incoming signals are rotated by $2\pi\Delta f_1 t$ and $2\pi\Delta f_2 t$ with respect to the vector of a reference incoming signal. Thus, such relationship of frequency cancellation does not last constantly. Therefore, there is no such an area within the service area, where reception is disabled constantly due to a multi-path distortion.

FIG. 6A

EP 0 823 794 A1

## Description

Technical field

The present invention relates to an OFDM system, such as an OFDM broadcasting network system, for simultaneously transmitting OFDM signals of the same channel and same content from, e.g. a plurality of transmission stations, by using an OFDM (orthogonal frequency division multiplex) method, and to an OFDM apparatus used in this OFDM system, and more particularly to techniques for eliminating a constant reception-disabled state in a transmission area.

Background art

In order to improve conventional TV broadcasting services, there is an increasing demand for digital broadcasting in the field of ground broadcasting. In particular, an OFDM method, which is advantageous in a multi-path system (i.e. resistant to ghost in broadcasting), is thought to be prospective as a ground digital broadcasting method. An OFDM broadcasting network system using a dispersive transmission method has been developed, wherein transmission stations are arranged dispersively by using characteristics of OFDM signals, and OFDM signals of the same channel and same contents are transmitted. This type of broadcasting network system is generally called a single frequency network (SFN).

In a case where the OFDM broadcasting network is constructed, incoming signals from a plurality of transmission stations are synthesized and received at respective points within a service area. Accordingly, at reception points, the waves of these signals interfere with one another and a so-called multi-path distortion occurs. At some frequencies, a plurality of incoming signals intensity one another. At other frequencies, the incoming signals weaken one another.

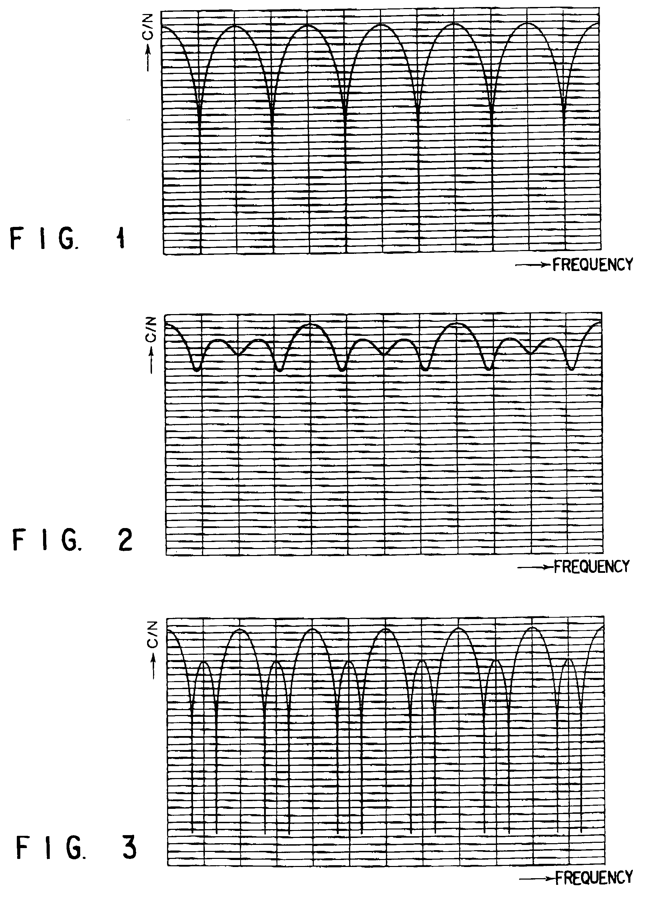

For example, when two waves are received with different delay times, frequency characteristics of their synthesized electric field, as shown in FIG. 1, are obtained. Specifically, a great frequency dip occurs at intervals of inverse number of a time lag between the two incoming signals. Thus, even if the waves are received with the same power, the transmission quality is degraded, as compared to the case where the frequency characteristics are flat.

In a case where the number of incoming waves is three or more, the frequency dip can be canceled, as shown in FIG. 2, depending on a time lag between two or more waves. As a result, the frequency characteristics are flattened. However, at some locational points corresponding a specific time lag, the incoming waves cancel one another and large frequency dips occur, as shown in FIG. 3.

When the same OFDM signals are transmitted synchronously from broadcasting stations, the frequency characteristics are determined by the number of incoming signals, the intensity of electric field of the incoming signals, a delay time difference between the incoming signals. Thus, the frequency characteristics are determined by the positional relationship between each reception locational point and each transmission station.

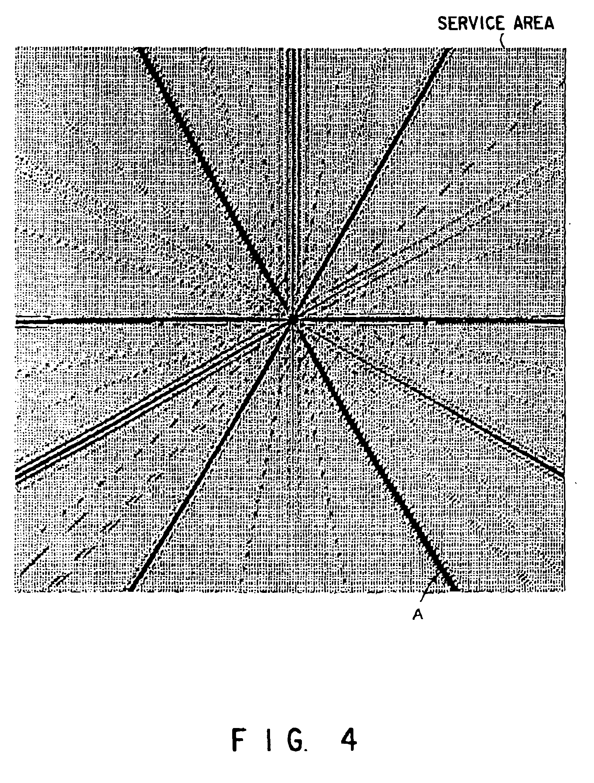

Accordingly, when the above-described OFDM broadcasting network is constructed, the frequency characteristics are different from location to location even within the same service area, resulting in a difference in reception quality. In particular, in a place where frequency characteristics are deteriorated, a constant reception-disabled state appears. In an area A in FIG. 4, a delay time difference is in a worst condition, and the reception quality is so bad that a required limit of an error ratio is exceeded.

Disclosure of invention

As has been described above, it was found that the OFDM system represented by the OFDM broadcasting network system using the dispersive transmission method has the following problem: there is no such an area within the service area, where reception is disabled constantly due to a multi-path distortion.

The present invention has been made in consideration of the above problem, and its object is to provide an OFDM system and an OFDM apparatus which are free from the problem in which there is no such an area within the service area, where reception is disabled constantly due to a multi-path distortion.

In order to achieve the above problem, there is provided an OFDM system for transmitting OFDM signals by an orthogonal frequency division multiplex (OFDM) method, the OFDM system characterized by comprising: a plurality of OFDM transmission means for transmitting the OFDM signals from different ground points in the same channel at the same time; and transmission output characteristic control means for controlling transmission output characteristics of at least one of the OFDM transmission means, such that frequency characteristics of a synthesized electric field at a given location within a transmission area of the plurality of OFDM transmission means vary with the passing of time.

There is also provided an OFDM system for transmitting, from a given ground point, OFDM signals by an orthogonal frequency division multiplex method, the OFDM system characterized by comprising: a plurality of OFDM transmission means, arranged at transmission points of the OFDM signals, for transmitting the OFDM signals independently in the same channel at the same time; and transmission output characteristic control means for controlling transmission output characteristics of at least one of the OFDM transmission means, such that frequency characteristics of a synthesized electric field at a given reception point within a transmission area of the plurality of OFDM transmission means vary with the passing of time.

In particular, the transmission output characteristic control means controls the transmission output characteristics such that the value of continuation time TF, in which a bit error ratio after OFDM demodulation in a given reception point within the transmission area exceeds a predetermined value, becomes less than a predetermined time $aT_I$ (a = a positive real number) determined by a depth $T_I$ of a time-axis interleave, wherein the depth of the time-axis interleave represents a degree by which mutually adjacent transmission data items in a bit stream before the interleave are separated from each other on a time axis after the interleave, while the OFDM transmission data of the OFDM transmission means is being interleaved.

Specifically, the transmission output characteristic control means is achieved by the following techniques:

(1) A transmission output frequency of at least one of the OFDM transmission means is displaced from a reference frequency of a transmission channel by a predetermined amount.

This technique is realized by displacing an oscillation frequency of a local oscillator for transmission signal frequency conversion, which is used in at least one of the OFDM transmission means, from a reference frequency by a predetermined amount.

(2) A transmission output frequency of at least one of the OFDM transmission means is temporally varied.

This technique is realized by providing a frequency modulator on a transmission passage of the OFDM transmission signals in at least one of the OFDM transmission means, and by enabling the frequency modulator to frequency-modulate the transmission signals on the basis of a predetermined time function.

Alternatively, this technique is realized by frequency-modulating, on the basis of a predetermined time function, a local oscillation signal for transmission frequency conversion in at least one of the OFDM transmission means.

(3) A phase difference between the OFDM transmission signals in at least two of the OFDM transmission means is temporally varied.

This technique is achieved by providing a phase modulator on a transmission passage of the OFDM transmission signals in at least one of the OFDM transmission means, and by enabling the phase modulator to phase-modulate the transmission signals on the basis of a time function different from a time function for the transmission signals in other transmission means.

Alternatively, this technique is achieved by phase-modulating a local oscillation signal for transmission frequency conversion in at least one of the OFDM transmission means on the basis of a time function different from a time function for a local oscillation signal for transmission frequency conversion in other transmission means.

(4) Transmission delay time differences between transmission signals from at least two of the OFDM transmission means are temporally varied.

This technique can be realized by providing a dispersive delay circuit (or an ordinary delay circuit) on a transmission passage of the OFDM transmission signals in at least one of the OFDM transmission means, and varying a delay amount of the dispersive delay circuit on the basis of a time function different from a time function for transmission signals in other transmission means.

Specifically, in the basic operation of the OFDM system according to the present invention, the transmission output characteristics of a given one of the OFDM transmission means is controlled. Thereby, the frequency characteristics of the reception signal at each ground point within the transmission area is temporally varied, and the following two states are alternately created at predetermined cycles: a state in which a great frequency dip is present in the frequency characteristics of the reception signal, and a state in which such a frequency dip is canceled.

If the frequency dip is prevented from occurring constantly, the bit error ratio after the error correction on the reception side can be maintained at such a level that a required transmission quality can be obtained, by setting the depth $T_I$ of the time-axis interleave such that the value of continuation time $T_F$, in which a bit error ratio after OFDM demodulation exceeds a predetermined value, becomes less than a predetermined time $aT_I$ (a = a positive real number) determined by the depth $T_I$ of the time-axis interleave. In addition, the reception-disabled area is eliminated from the transmission area.

In the technique (1), the output frequency of a given one of the OFDM transmission means is displaced by a predetermined and transmitted. Thereby, the phases of the incoming signals from each OFDM transmission means at the reception point are temporally varied, and the frequency characteristics of their synthesized electric field are also temporally varied. The rate of variation in this case is determined by the frequency displaced by the transmission means.

Thus, by adjusting the rate of variation and the depth of the time interleave, a required transmission quality after the error correction on the reception side can be maintained.

In the technique (2), the transmission signal of a given one of the OFDM transmission means is frequency-modulated. Thereby, the phases of the incoming signals from each transmission means at the reception point are temporally varied, and the frequency characteristics of their synthesized electric field are also temporally varied. The rate of variation in this case is determined by the rate of phase modulation in the transmission station. Thus, by adjusting the rate of variation and the depth of the time interleave, a required transmission quality after the error correction on the reception side can be maintained.

In the technique (3), the transmission signal of a given one or more of the OFDM transmission means is phase-modulated. Thereby, the phases of the incoming signals from each OFDM transmission means at the reception point are temporally varied, and the frequency characteristics of their synthesized electric field are also temporally varied. The rate of variation in this case is determined by the rate of phase modulation in each OFDM transmission means. Thus, by adjusting the rate of variation and the depth of the time interleave, a required transmission quality after the error correction on the reception side can be maintained.

In the technique (4), the transmission signal of a given one or more of the OFDM transmission means is varied at a predetermined cycle. Thereby, a difference in arrival time of signals from each transmission means at the reception point is varied, and the frequency characteristics of their synthesized electric field are also temporally varied. The rate of variation in this case is determined by the rate of variation in delay time of the delay circuit in each transmission means. Thus, by adjusting the rate of variation and the depth of the time interleave, a required transmission quality after the error correction on the reception side can be maintained.

When the above-described OFDM system is constructed, the OFDM apparatus provided at the transmission point should have the following advantageous structure: transmission output characteristic control means is provided for controlling, as desired, the transmission output characteristics of the OFDM signals, and the frequency characteristics of the synthesized electric field at the reception ground point within the transmission area are temporally varied by this control means.

In addition, the following structure is effective: in a case where the OFDM apparatus further comprises a time-axis interleave process means for subjecting the OFDM transmission signals to a time-axis interleave, the transmission output characteristic control means control the transmission output characteristics such that the value of continuation time TF, in which a bit error ratio after OFDM demodulation in a given reception point within the transmission area exceeds a predetermined value, becomes less than a predetermined time $aT_I$ (a = a positive real number) determined by a depth $T_I$ of a time-axis interleave, wherein the depth of the time-axis interleave represents a degree by which mutually adjacent transmission data items in a bit stream before the time-axis interleave are separated from each other on a time axis after the interleave.

Specifically, the transmission output characteristic control means can be effectively achieved by the following techniques:

(A) A transmission output frequency of the OFDM transmission signal is displaced from a reference frequency of a transmission channel by a predetermined amount. For example, an oscillation frequency of a local oscillator for transmission signal frequency conversion of the OFDM transmission signal is displaced from a reference frequency by a predetermined amount.

(B) A transmission output frequency of the OFDM transmission signal is temporally varied. For example, a frequency modulator is provided on a transmission passage of the OFDM transmission signals, and the frequency modulator frequency-modulates the transmission signals on the basis of a predetermined time function. Alternatively, the local oscillation signal for transmission frequency conversion of the OFDM transmission signal is frequency-modulated on the basis of a predetermined time function.

(C) Phases of transmission signals of the OFDM transmission signals are temporally varied. For example, this technique is achieved by providing a phase modulator on a transmission passage of the OFDM transmission signals, and by enabling the phase modulator to phase-modulate the transmission signals on the basis of a predetermined time function. Alternatively, the local oscillation signal for transmission frequency conversion of the OFDM transmission signal is phase-modulated on the basis of a predetermined time function.

(D) Transmission delay time differences between the OFDM transmission signals are temporally varied. For example, this technique can be realized by providing a dispersive delay circuit (or an ordinary delay circuit) on a transmission passage of the OFDM transmission signals, and varying a delay amount of the dispersive delay circuit on the basis of time functions different from each other.

The present invention is applicable not only to the OFDM broadcasting network system but also to a TV material transmission system for transmitting TV material information from a given ground point, or a wireless camera system for wirelessly transmitting TV signals acquired by a wireless TV camera.

Brief description of drawings

FIG. 1 is a characteristic graph showing frequency characteristics of a synthesized electric field in a case where two waves with different delay times are received at a certain reception point in an OFDM broadcasting network system using a dispersive transmission method;

FIG. 2 is a characteristic graph showing a state in which frequency dips in synthesized electric field frequency characteristics are canceled when three waves with different delay times are received at a certain reception location in the above system;

FIG. 3 is a characteristic graph showing a state in which great frequency dips occur in synthesized electric field frequency characteristics when three waves with different delay times are received at a certain reception location in the above system;

FIG. 4 is a graph of a reception error ratio distribution, illustrating a state in which frequency characteristics differ from location to location within the service area and a reception quality varies;

FIGS. 5A and 5B are vector diagrams for explaining problems to be solved by an OFDM broadcasting network system using a dispersive transmission method, according to the present invention;

FIGS. 6A and 6B are vector diagrams for describing the operational principle of a first embodiment of the present invention;

FIG. 7 is a bit error ratio/time characteristic diagram for explaining set conditions in first to third embodiments of the invention;

FIGS. 8A and 8B are vector diagrams for describing the operational principle of a second embodiment of the present invention;

FIG. 9 is a block circuit diagram showing a concrete structure of transmission equipment in each transmission station, by which the second embodiment of the invention can be achieved;

FIGS. 10A and 10B are vector diagrams for describing the operational principle of a third embodiment of the present invention;

FIG. 11 is a block circuit diagram showing a concrete structure of transmission equipment in each transmission station, by which the third embodiment of the invention can be achieved;

FIGS. 12A and 12B are vector diagrams for describing the operational principle of a fourth embodiment of the present invention;

FIG. 13 is a block circuit diagram showing a concrete structure of transmission equipment in each transmission station, by which the fourth embodiment of the invention can be achieved; and

FIG. 14 is a block circuit diagram showing a structure of an OFDM apparatus according to another embodiment of the invention.

Best mode of carrying out the invention

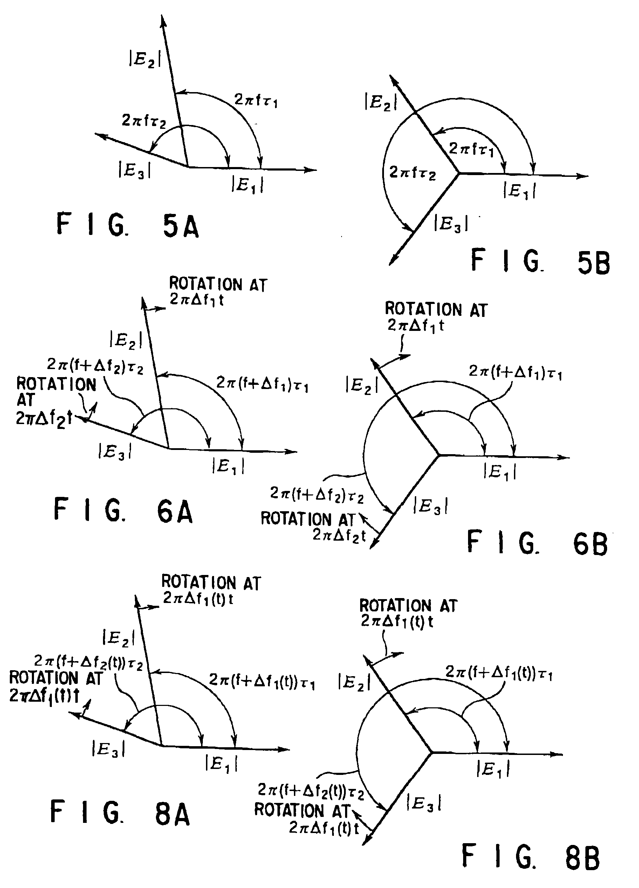

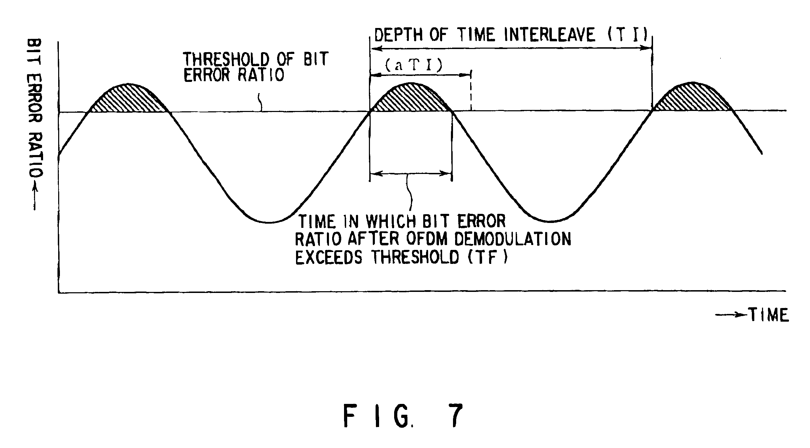

Embodiments of the present invention will now be described in detail with reference to FIGS. 5 to 14.

In a first embodiment of the invention, this invention is applied to an OFDM broadcasting network. In this embodiment, the number of transmission stations constituting the network is, for example, three. In this case, frequency characteristics of a synthesized electric field at a reception point within a service area is expressed by

$$|E|(f) = ||E_1|+|E_2|e^{-j2\pi f\tau_1} + |E_3|e^{-j2\pi f\tau_2}| \tag{1}$$

where

|E|(f):     frequency characteristics of synthesized electric field,
f:     frequency,
$|E_n|$:     electric field intensity of incoming wave n (n = 1, 2, 3),
$\tau_n$:     time difference in incoming signals (n = 1, 2).

The respective terms in equation (1) correspond to incoming signals from respective transmission stations. FIGS. 5A and 5B illustrate this correspondency with respect to one carrier wave of the OFDM by using vectors.

If each carrier wave of the OFDM is considered, the direction and magnitude of each vector are determined by the arrival time of each incoming signal and the electric field intensity thereof. FIG. 5A shows the state in which incoming signals with different electric field intensities are received, and the directions of vectors determined by arrival time differences are not related with one another.

By contrast, FIG. 5B shows the state in which incoming signals with substantially equal electric field intensities are received, and the directions of vectors determined by arrival time differences are so related as to cancel one another. In an area (reception point) where there is such a relation, great dips occur in the reception signals at frequencies which cancel each other, and reception quality is degraded constantly.

In the present invention, in order to solve this problem, transmission output characteristics of each of a plurality of transmission stations are controlled so that frequency characteristics of the synthesized electric field may vary with the passing of time at a given reception point within the service area formed by the transmission stations. Thereby, the state illustrated in FIG. 5B is prevented from remaining constantly at any point within the service area.

The first embodiment of the invention will now be described in detail with reference to FIGS. 6A, 6B and 7.

In this embodiment, the transmission frequencies of non-reference transmission stations (sub-transmission stations) are displaced by $\Delta f_1$ and $\Delta f_2$ respectively from the transmission frequency of a reference transmission station (main transmission station). In this case, frequency characteristics of a reception electric field at a given point within the service area are expressed by the following equation (2). The frequency characteristics are also represented by vector diagrams of FIGS. 6A and 6B. FIGS. 6A and 6B correspond to FIGS. 5A and 5B.

$$|E|(f) = ||E_1| + |E_2|e^{-j2\pi\{(f+\Delta f_1)\tau_1 - \Delta f_1 t\}} + |E_3|e^{-j2\pi\{(f+\Delta f_2)\tau_2 - \Delta f_2 t\}}| \qquad (2)$$

Each term of the right side of equation (2) corresponds to an incoming signal from each transmission station. The second term includes a time-dependency item of $-\Delta f_1 t$ and the third term includes a time-dependency item of $-\Delta f_2 t$. Specifically, even if the frequencies cancel each other at some time point, as shown in FIG. 6B, the vectors of two non-reference incoming signals are rotated by $2\pi\Delta f_1 t$ and $2\pi\Delta f_2 t$. Thus, such relationship of frequency cancellation does not last constantly.

In this embodiment, the second and third terms vary by a cycle of $1/\Delta f_1$ and a cycle of $1/\Delta f_2$ respectively. The left side of equation (2), representing the frequency characteristics at the reception point, also varies cyclically. As is shown in FIG. 7, the degrees of displacement, $\Delta f_1$ and $\Delta f_2$, of transmission output frequencies of the respective transmission stations are set so that the value of continuation time TF, in which the bit error ratio in one cycle after OFDM demodulation exceeds a predetermined value, becomes less than a predetermined time $aT_I$ (a = a positive real number) determined by depth $T_I$ of a time-axis interleave. Thereby, a desired reception quality can be obtained after proper error correction on the reception side.

It is necessary, however, that the relationship between $\Delta f_1$ and $\Delta f_2$ are set so that the cycle of occurrence of frequency dips may increase.

A second embodiment of the invention will now be described with reference to FIGS. 8A, 8B, 9 and 7.

In this embodiment, the transmission frequencies of the respective transmission stations are varied by time functions $\Delta f_1(t)$ and $\Delta f_2(t)$. In this case, frequency characteristics at a given point within the service area are expressed by the following equation (3). The frequency characteristics are also represented by the vector diagram of FIG. 4. FIGS. 8A and 8B correspond to FIGS. 7A and 7B.

$$|E|(f) = ||E_1| + |E_2|e^{-j2\pi\{(f+\Delta f_1(t))\tau_1 - \Delta f_1(t)t\}} + |E_3|e^{-j2\pi\{(f + \Delta f_2(t))\tau_2 - \Delta f_2(t)t\}}| \qquad (3)$$

Each term of the right side of equation (3) corresponds to an incoming signal from each transmission station. The second term includes a time-dependency item of $\Delta f_1(t)t$ and the third term includes a time-dependency item of $\Delta f_2(t)t$. Specifically, even if the frequencies cancel each other at some time point, as shown in FIG. 8B, the vectors of two non-reference incoming signals are rotated by $2\pi\Delta f_1(t)t$ and $2\pi\Delta f_2(t)t$ with respect to the vector of the reference incoming signal. Thus, such relationship of frequency cancellation does not last constantly.

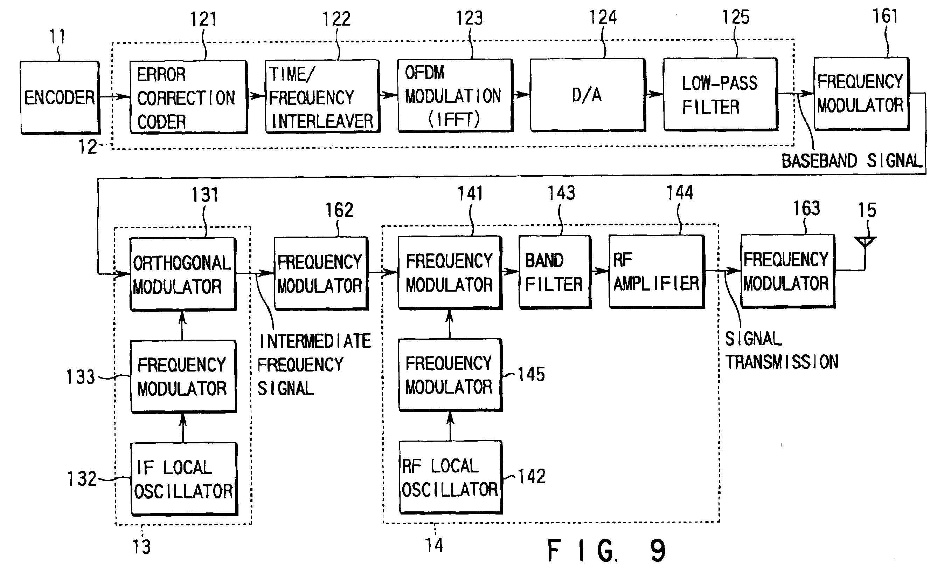

FIG. 9 shows concrete structure of transmission equipment in each transmission station, by which the transmission output frequency is varied, as described above. Input data is encoded in a predetermined format in an encoder 11 and then supplied to an OFDM modulator 12.

The data input to the OFDM modulator 12 is combined with an error correction code in an error correction coder. The data combined with the error correction code is then subjected to a time interleave and a frequency interleave in a time/frequency interleaver 122. The data output from the interleaver 122 is subjected to OFDM modulation by inverted Fourier transform in an OFDM modulation circuit 123. The output from the OFDM modulation circuit 123 is converted to a baseband analog signal by a D/A (digital/analog) converter 124 and a low-pass filter 125. The baseband signal is delivered to an intermediate frequency (IF) processor 13.

In the IF processor 13, the baseband signal is input to an orthogonal modulator 131 and subjected to orthogonal modulation, on the basis of an IF local oscillation signal output from an IF local oscillator 132, and converted to an intermediate frequency signal. The intermediate frequency signal is supplied to a radio-frequency (RF) processor 14.

In the radio-frequency processor 14, the input intermediate frequency signal is supplied to a frequency converter 141 and converted upward on the basis of an RF local oscillation signal output from an RF local oscillator 142. Then, an unnecessary frequency component is removed through a band filter 143, and the obtained signal is power-amplified by an RF amplifier 144 and output as a transmission signal. The transmission signal is sent to the service area via a transmission antenna 15.

In the transmission equipment with the above structure, according to the present embodiment, frequency modulators 161, 162 and/or 163 are provided between the OFDM modulator 12 and intermediate frequency processor 13, between the intermediate frequency processor 13 and RF processor 14, and/or the RF processor 14 and transmission antenna. In addition, in the intermediate frequency processor 13 the frequency modulator 133 is provided between the IF local oscillator 132 and orthogonal modulator 131, and/or in the RF processor 14 the frequency modulator 145 is provided between the RF local oscillator 142 and frequency modulator 141. Any one of the baseband signal, intermediate frequency signal, transmission signal, IF local oscillation signal and RF local oscillation signal is frequency-modulated by a time function. Thereby, the transmission output frequency is varied according to a predetermined time function.

Now consider the case where any one of the baseband signal, intermediate frequency signal, transmission signal, IF local oscillation signal and RF local oscillation signal is frequency-modulated by sine waves of cycles $1/b_1$ and $1/b_2$ in each transmission station having the transmission equipment with the above structure. In this case, the time functions $\Delta f_1(t)$ and $\Delta f_2(t)$ are expressed as follows:

$$\Delta f_1(t) = \sin(2\pi b_1), \text{ and } \Delta f_2(t) = \sin(2\pi b_2)$$

In this case, the phases of the second and third terms of the right side of equation (3) are varied in a sine-wave fashion at cycles of $1/b_1$ and $1/b_2$. The left side of equation (3), representing the frequency characteristics at the reception point, are also varied cyclically. For example, as shown in FIG. 7, the cycles $1/b_1$ and $1/b_2$ are set so that the value of continuation time TF, in which the bit error ratio in one cycle after OFDM demodulation exceeds a predetermined value, becomes less than a predetermined time $aT_I$ (a = a positive real number) determined by depth $T_I$ of a time-axis interleave. Thereby, proper error correction is performed on the reception side, and a desired reception quality can be obtained.

It is necessary, however, that the relationship between $1/b_1$ and $1/b_2$ are set so that the cycle of occurrence of frequency dips may increase.

A third embodiment of the invention will now be described with reference to FIGS. 10A, 10B, 11 and 7.

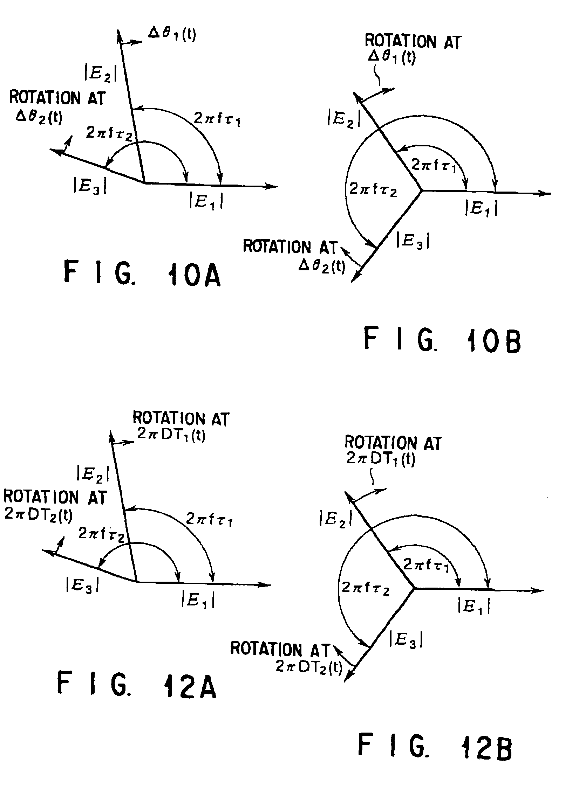

In this embodiment, the phase differences in transmission outputs from the respective transmission stations are varied by time functions $\Delta\theta_1(t)$ and $\Delta\theta_2(t)$. In this case, frequency characteristics at a given point within the service area are expressed by the following equation (4). The frequency characteristics are also represented by the vector diagrams of FIGS. 10A and 10B. FIGS. 10A and 10B correspond to FIGS. 5A and 5B.

$$|E|(f) = ||E_1| + |E_2|e^{-j\{2\pi f\tau_1 - \Delta\theta_1(t)\}} + |E_3|e^{-j\{2\pi f\tau_2 - \Delta\theta_2(t)\}}| \tag{4}$$

Each term of the right side of equation (4) corresponds to an incoming signal from each transmission station. The second term includes a time-dependency item of $\Delta\theta_1(t)$ and the third term includes a time-dependency item of $\Delta\theta_2(t)$. Specifically, even if the frequencies cancel each other at some time point, as shown in FIG. 10B, the vectors of two non-reference incoming signals are rotated by $\Delta\theta_1(t)$ and $\Delta\theta_2(t)$ with respect to the vector of the reference incoming signal. Thus, such relationship of frequency cancellation does not last constantly.

FIG. 11 shows concrete structure of transmission equipment in each transmission station, by which the phase differences in transmission outputs are varied, is described above. In FIG. 11, the structural elements common to those in FIG. 9 are denoted by like reference numerals and a description thereof is omitted.

According to the present embodiment, the transmission equipment generally comprises an encoder 11, an OFDM modulator 12, an intermediate frequency processor 13, an RF processor 14 and a transmission antenna 15. In this transmission equipment, phase modulators 171, 172 and/or 173 are provided between the OFDM modulator 12 and intermediate frequency processor 13, between the intermediate frequency processor 13 and RF processor 14, and/or the RF processor 14 and transmission antenna. In addition, in the intermediate frequency processor 13 a phase modulator 134 is provided between the IF local oscillator 132 and orthogonal modulator 131, and/or in the RF processor 14 a phase modulator 146 is provided between the RF local oscillator 142 and frequency modulator 141. Any one of the baseband signal, intermediate frequency signal, transmission signal, IF local oscillation signal and RF local oscillation signal is phase-modulated by a time function. Thereby, the phase differences in transmission outputs are varied according to a predetermined time function.

Now consider the case where any one of the baseband signal, intermediate frequency signal, transmission signal, IF local oscillation signal and RF local oscillation signal is phase-modulated by sine waves of cycles $1/c_1$ and $1/c_2$ in each transmission station having the transmission equipment with the above structure. In this case, the time functions $\Delta\theta_1(t)$ and $\Delta\theta f_2(t)$ are expressed as follows:

$$\Delta\theta_1(t) = \sin(2\pi c_1 t), \text{ and } \Delta\theta_2(t) = \sin(2\pi c_2 t)$$

In this case, the phases of the second and third terms of the right side of equation (4) are varied in a sine-wave fashion at cycles of $1/c_1$ and $1/c_2$. The left side of equation (4), representing the frequency characteristics at the reception point, are also varied cyclically. For example, as shown in FIG. 7, the cycles $1/c_1$ and $1/c_2$ are set so that the value of continuation time TF, in which the bit error ratio in one cycle after OFDM demodulation exceeds a predetermined value, becomes less than a predetermined time $aT_I$ (a = a positive real number) determined by depth $T_I$ of a time-axis interleave. Thereby, proper error correction is performed on the reception side, and a desired reception quality can be obtained.

It is necessary, however, that the relationship between $1/c_1$ and $1/c_2$ are set so that the cycle of occurrence of frequency dips may increase.

A fourth embodiment of the invention will now be described with reference to FIGS. 12A, 12B, 13 and 7.

In this embodiment, the transmission delay time differences in transmission outputs from the respective transmission stations are varied by time functions $\Delta DT_1(t)$ and $\Delta DT_2(t)$. In this case, frequency characteristics at a given point within the service area are expressed by the following equation (5). The frequency characteristics are also represented by the vector diagrams of FIGS. 12A and 12B. FIGS. 12A and 12B correspond to FIGS. 5A and 5B.

$$|E|(f) = ||E_1| + |E_2|e^{-j2\pi f\{\tau_1+\Delta DT_1(t)\}} +|E_3|e^{-j2\pi f\{\tau_2+\Delta DT_2(t)\}}| \qquad (5)$$

Each term of the right side of equation (5) corresponds to an incoming signal from each transmission station. The second term includes a time-dependency item of $\Delta DT_1(t)$ and the third term includes a time-dependency item of $\Delta DT_2(t)$. Specifically, even if the frequencies cancel each other at some time point, as shown in FIG. 12B, the vectors of two non-reference incoming signals are rotated by $2\pi DT_1(t)$ and $2\pi DT_2(t)$ with respect to the vector of the reference incoming signal. Thus, such relationship of frequency cancellation does not last constantly.

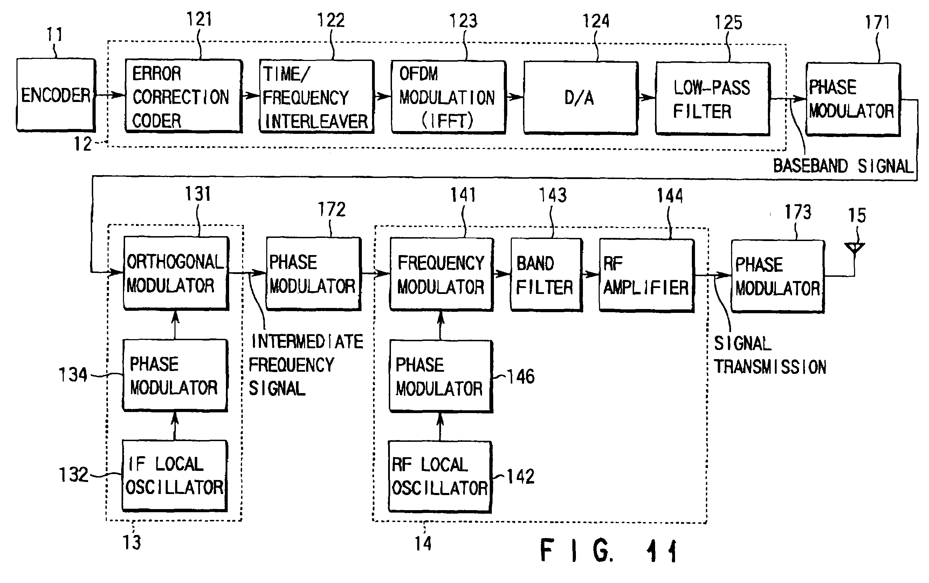

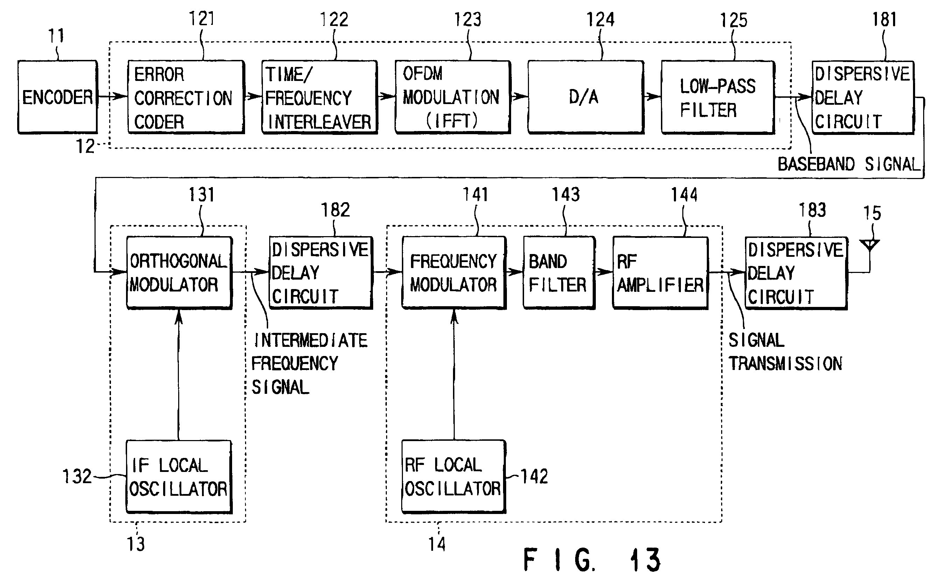

FIG. 13 shows concrete structure of transmission equipment in each transmission station, by which the transmission delay time differences in transmission outputs are varied, as described above. In FIG. 13, the structural elements common to those in FIG. 9 are denoted by like reference numerals and a description thereof is omitted.

According to the present embodiment, the transmission equipment generally comprises an encoder 11, an OFDM modulator 12, an intermediate frequency processor 13, an RF processor 14 and a transmission antenna 15. In this transmission equipment, dispersive delay circuits 181, 182 and 183 are provided between the OFDM modulator 12 and intermediate frequency processor 13, between the intermediate frequency processor 13 and RF processor 14, and/or the RF processor 14 and transmission antenna. The dispersive delay amount of any one of the baseband signal, intermediate frequency signal and transmission signal is varied by a time function. Thereby, the transmission delay time differences in transmission outputs are varied according to a predetermined time function.

Now consider the case where the delay amount of any one of the baseband signal, intermediate frequency signal and transmission signal is modulated by sine waves of cycles $1/d_1$ and $1/d_2$ by using the dispersive delay circuit having frequency characteristics of $1/_{2f}$ in each transmission station having the transmission equipment with the above structure. In this case, the time functions $\Delta DT_1(t)$ and $\Delta DT_2(t)$ are expressed as follows:

$$\Delta DT_1(t) = 1/_{2f} \sin(2\pi d_1 t), \text{ and } \Delta DT_2(t) = 1/_{2f} \sin(2\pi d_2 t)$$

In this case, the phases of the second and third terms of the right side of equation (5) are varied in a sine-wave fashion at cycles of $1/d_1$ and $1/d_2$.

The left side of equation (5), representing the frequency characteristics at the reception point, are also varied cyclically. For example, as shown in FIG. 7, the cycles $1/d_1$ and $1/d_2$ are set so that the value of continuation time $T_F$, in which the bit error ratio in one cycle after OFDM demodulation exceeds a predetermined value, becomes less than a predetermined time aTI (a = a positive real number) determined by depth TI of a time-axis interleave. Thereby, proper error correction is performed on the reception side, and a desired reception quality can be obtained.

It is necessary, however, that the relationship between $1/d_1$ and $1/d_2$ are set so that the cycle of occurrence of frequency dips may increase.

In the above-described embodiment, the dispersive delay circuit is used. However, the same advantages can be obtained with use of an ordinary delay circuit.

Needless to say, in the present invention, the above-described embodiments may be suitably combined. In addition, the present invention is not limited to the above embodiments.

For example, in the first and second embodiments, the IF local oscillation signal or RF local oscillation signal in the transmission equipment is subjected to frequency modulation or phase modulation. However, the same advantages can be obtained even if the oscillation frequency control signal from the local oscillator is subjected to frequency modulation or phase modulation.

In each of the above-described embodiments, the number of transmission stations is set at three. The present invention, however, can be achieved if the number of transmission stations is two or more. In each embodiment, the frequency displacement, frequency modulation, phase modulation and transmission time delay are set or controlled in all transmission stations. However, regarding this matter, the number of transmission stations is not limited.

Needless to say, the present invention can be achieved if there is the function of controlling the transmission output characteristics of each transmission station so that the frequency characteristics of the synthesized electric field at a given reception point within the service area defined by the transmission stations may vary with the passing of time.

In the above embodiments, the present invention is applied to the OFDM broadcasting network system. This invention, however, can be applied to other communications systems.

In a case where an FPU (Field Pick-up Unit) communications circuit is constructed to transfer a TV program material to a broadcasting station from a mobile body such as a relay vehicle or a case where a wireless camera system is constructed to transmit a camera output within a studio by means of wireless transmission, many reflection waves or diffraction waves are often present in transmission paths due to influences of buildings or mountains in the former case and due to influences of walls or stage setting in the latter case.

In such a system, the use of an OFDM method is effective. However, as mentioned above, such waves interfere with one another at the reception point, and a so-called multi-path distortion occurs. At some frequencies, a plurality of incoming signals intensity one another; and at other frequencies, the incoming signals weaken one another.

When two waves are received with a delay time, such frequency characteristics of their synthesized electric field, as are shown in FIG. 1, are obtained. Specifically, great frequency dips occur at intervals of a time lag between the two incoming signals. Thus, even if the waves are received with the same power, the transmission quality is degraded, as compared to the case where the frequency characteristics are flat.

In a case where the number of incoming waves is three or more, the frequency dip can be canceled, as shown in FIG, 2, depending on a time lag between two or more waves. As a result, the frequency characteristics are flattened. However, at some locational points corresponding a specific time lag, the incoming waves cancel one another and large frequency dips occur, as shown in FIG. 3.

The frequency characteristics are determined by the number of incoming waves, the electric field intensity of the incoming signals, and the delay time difference. The transmission quality varies, depending on the positional relationship between the reception point and transmission point and the conditions of received reflection waves or diffraction waves.

In a case where waves are transmitted with the reception point and transmission point being fixed, transmission is often disabled because of the condition of the reflection waves and diffraction waves. For example, in a case where a mobile transmission system using EPU is used to provide a TV program such as a road race, transmission may be disabled intermittently due to the influence of reflection waves or diffraction waves even if the reception electric field is sufficient.

When photographing is performed within a studio by using a wireless camera system, there is an area where wave reception is disabled because of the position of the camera or the presence of some object causing reflection or diffraction.

The present invention can solve the above problem. Since reflection waves or diffraction waves of OFDM signals can be regarded as OFDM transmission sources, such an area where reception is disabled can be eliminated if at least reflection waves or diffraction waves would vary with the passing of time.

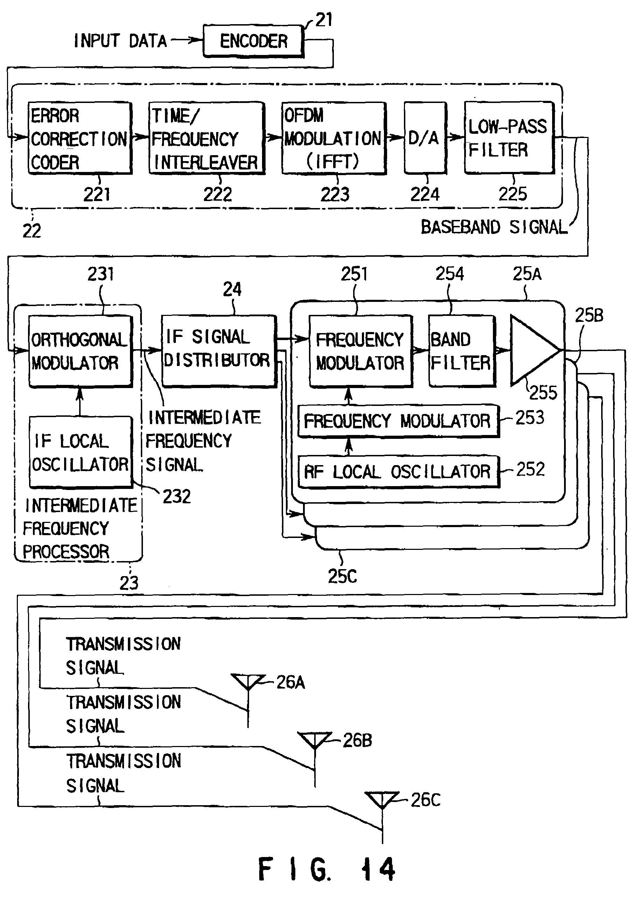

FIG. 14 shows a structure of an OFDM apparatus built in a transmission unit in a TV program material transmission system or a wireless camera system, to which the present invention is applied.

In FIG. 14, input data, such as TV program material information or TV signals obtained by a camera unit, is encoded in a predetermined format in an encoder 21. The encoded data is supplied to an OFDM modulator 22.

The data input to the OFDM modulator 22 is combined with an error correction code in an error correction coder 221. The resultant data is subjected to a time interleave or a frequency interleave in a time/frequency interleaver 222. The output from the time/frequency interleaver 222 is subjected to OFDM modulation by inverse Fourier transform (IFFT) in an OFDM modulation circuit 223. The output from the OFDM modulation circuit 223 is converted to a baseband analog signal by a D/A (digital/analog) converter 224 and a low-pass filter 225. The baseband signal is delivered to an intermediate frequency (IF) processor 23.

In the IF processor 23, the baseband signal is input to an orthogonal modulator 231 and subjected to orthogonal modulation, on the basis of an IF local oscillation signal output from an IF local oscillator 232, and converted to an intermediate frequency signal. The intermediate frequency signal is distributed to plural lines (three in FIG. 14) by an IF signal distributor 24. The distributed signals are delivered to independently provided radio-frequency (RF) processors 25A to 25C.

The intermediate frequency signal input to each of the RF processors 25A to 25C is supplied to a frequency converter 251 and converted upward on the basis of an RF local oscillation signal output from an RF local oscillator 252. Then, an unnecessary frequency component is removed through a band filter 254, and the obtained signal is power-amplified by an RF amplifier 255 and output as a transmission signal. The transmission signals from the RF processors 25A to 25C are sent to the service area via transmission antennae 26A to 26C.

In the RF processor 25A of the three RF processors 25A to 25C, the RF local oscillation signal output from the RF local oscillator 252 is frequency-modulated by the frequency modulator 253 and then supplied to the frequency converter 251.

Specifically, in the OFDM apparatus having the above structure, the signal OFDM signal is distributed to three lines and the distributed signals are transmitted in the same channel. In this case, the RF processor 25A alone modulates the frequency of the RF local oscillation signal at the time of frequency conversion. Thus, three OFDM signals of the same channel and content are output from the OFDM apparatus, and one of them is frequency-modulated.

As a result, even when incoming waves are received at a given point within the transmission area, any one of the reflection and diffraction waves is frequency-modulated. Thus, it is possible to prevent such a situation from arising, wherein the incoming waves cancel one another and great frequency dips occur.

If the OFDM apparatus having the above structure is built in the TV program material transmission apparatus or wireless camera, the reception-disabled area can be eliminated from the transmission area, and high reliability can be obtained.

In the above-described structure of the OFDM apparatus, the RF local oscillation signal is frequency-modulated. In principle, however, it should suffice if the transmission output characteristics of at least one of transmission OFDM signals are varied with the passing of time. The transmission output characteristics can be controlled, for example, by the above-described method applied to the OFDM broadcasting network system.

Needless to say, the present invention is applicable to various OFDM systems.

As has been described above, the present invention can provide an OFDM system and an OFDM apparatus capable of preventing the transmission area from having an area where reception of waves is disabled constantly due to a multi-path distortion.

Industrial applicability

The present invention can provide an OFDM system and an OFDM apparatus capable of preventing the transmission area from having an area where reception of waves is disabled constantly due to a multi-path distortion.

**Claims**

1. An OFDM system for transmitting OFDM signals by an orthogonal frequency division multiplex (OFDM) method, the OFDM system characterized by comprising:

   a plurality of OFDM transmission means for transmitting the OFDM signals from different ground points in the same channel at the same time; and
   transmission output characteristic control means for controlling transmission output characteristics of at least one of the OFDM transmission means, such that frequency characteristics of a synthesized electric field at a given location within a transmission area of the plurality of OFDM transmission means vary with the passing of time.

2. The OFDM system according to claim 1, characterized in that when said OFDM system is applied to an OFDM broadcasting network system for transmitting OFDM broadcasting signals with the same content in the same channel from a plurality of transmission stations located at different points,

   said plurality of OFDM transmission means are arranged in the transmission stations respectively, and
   said transmission output characteristic control means controls transmission output characteristics of at least one of the transmission stations, such that frequency characteristics of a synthesized electric field at a given reception point within a broadcasting service area formed by transmission from said transmission stations vary with the passing of time.

3. An OFDM system for transmitting, from a given ground point, OFDM signals by an orthogonal frequency division multiplex method, the OFDM system characterized by comprising:

   a plurality of OFDM transmission means, arranged at transmission points of the OFDM signals, for transmitting the OFDM signals independently in the same channel at the same time; and
   transmission output characteristic control means for controlling transmission output characteristics of at least one of the OFDM transmission means, such that frequency characteristics of a synthesized electric field at a given reception point within a transmission area of the plurality of OFDM transmission means vary with the passing of time.

4. The OFDM system according to claim 3, characterized in that in a case where said OFDM system is applied to a TV program material transmission system for transmitting TV material information from a given point,

said OFDM system further comprises OFDM modulation means for OFDM-modulating the TV material information, and a modulated output from the OFDM modulation means is transmitted by said plurality of OFDM transmission means.

5. The OFDM system according to claim 3, characterized in that in a case where said OFDM system is applied to a wireless camera system for wirelessly transmitting a TV signal obtained by a wireless TV camera,

said OFDM system further comprises OFDM modulation means for OFDM-modulating the TV signal, said OFDM modulation means, said plurality of OFDM transmission means and said transmission output characteristic control means are built in the wireless TV camera system, and an OFDM modulation output of the TV signal is transmitted by said plurality of OFDM transmission means.

6. The OFDM system according to any one of claims 1 and 3, characterized in that with respect to at least one of said plurality of OFDM transmission means, said transmission output characteristic control means controls the transmission output characteristics such that the value of continuation time $T_F$ in which a bit error ratio after OFDM demodulation in a given reception point within the transmission area exceeds a predetermined value, becomes less than a predetermined time $aT_I$ (a = a positive real number) determined by a depth $T_I$ of a time-axis interleave, wherein the depth of the time-axis interleave represents a degree by which mutually adjacent transmission data items in a bit stream before the time-axis interleave are separated from each other on a time axis after the interleave while the OFDM transmission data is being interleaved.

7. The OFDM system according to any one of claims 1, 3 and 6, characterized in that said transmission output characteristic control means displaces a transmission output frequency of at least one of the OFDM transmission means from a reference frequency of a transmission channel by a predetermined amount.

8. The OFDM system according to claim 7, characterized in that said transmission output characteristic control means displaces an oscillation frequency of a local oscillator for transmission signal frequency conversion, which is used in at least one of the OFDM transmission means, from a reference frequency of a transmission channel by a predetermined amount.

9. The OFDM system according to any one of claims 1, 3 and 6, characterized in that said transmission output characteristic control means temporally varies a transmission output frequency of at least one of the OFDM transmission means.

10. The OFDM system according to claim 9, characterized in that in said transmission output characteristic control means, a frequency modulator is provided on a transmission passage of the OFDM transmission signals in at least one of the OFDM transmission means, and the frequency modulator frequency-modulates the OFDM transmission signals on the basis of a predetermined time function.

11. The OFDM system according to claim 5, characterized in that said transmission output characteristic control means frequency-modulates, on the basis of a predetermined time function, a local oscillation signal for transmission frequency conversion in at least one of the OFDM transmission means.

12. The OFDM system according to any one of claims 1 and 3, characterized in that said transmission output characteristic control means temporally varies a phase difference between the OFDM transmission signals in at least two of the OFDM transmission means.

13. The OFDM system according to claim 12, characterized in that in said transmission output characteristic control means, a phase modulator is provided on a transmission passage of the OFDM transmission signals in at least one of the OFDM transmission means, and the phase modulator phase-modulates the transmission signals on the basis of a time function different from a time function for the transmission signals in other transmission means.

14. The OFDM system according to claim 12, characterized in that said transmission output characteristic control means phase-modulates a local oscillation signal for transmission frequency conversion in at least one of the OFDM transmission means on the basis of a time function different from a time function for a local oscillation signal for transmission frequency conversion in other transmission means.

15. The OFDM system according to any one of claims 1 and 3, characterized in that said transmission output characteristic control means temporally varies transmission delay time differences between transmission signals from at least two of the OFDM transmission means.

16. The OFDM system according to claim 10, characterized in that in said transmission output characteristic control means, a delay circuit is provided on a transmission passage of the OFDM transmission signals in at least one of the OFDM transmission means, and a delay amount of the delay circuit is varied on the basis of a time function different from a time function for transmission signals in other transmission means.

17. An OFDM apparatus provided at least one of plurality of transmission ground points and used in an OFDM system for transmitting OFDM signals from the ground points in the same channel with the same content by an orthogonal frequency division multiple (OFDM) method,
    characterized in that said OFDM apparatus comprises transmission output characteristic control means for controlling, as desired, transmission output characteristics of the OFDM signals and temporally varying frequency characteristics of a synthesized electric field at a given reception point within a transmission area.

18. An OFDM apparatus for transmitting OFDM signals from a given ground point by an orthogonal frequency division multiplex (OFDM) method, characterized by comprising:

    a plurality of OFDM transmission means for transmitting the OFDM signals independently in the same channel at the same time; and
    transmission output characteristic control means for controlling transmission output characteristics of at least one of the OFDM transmission means, such that frequency characteristics of a synthesized electric field at a given reception point within a transmission area of the plurality of OFDM transmission means vary with the passing of time.

19. The OFDM apparatus according to any one of claims 17 and 18, characterized in that in a case where the OFDM apparatus further comprises a time-axis interleave process means for subjecting the OFDM transmission signals to a time-axis interleave,

    said transmission output characteristic control means control the transmission output characteristics such that the value of continuation time $T_F$ in which a bit error ratio after OFDM demodulation in a given reception point within the transmission area exceeds a predetermined value, becomes less than a predetermined time $aT_I$ (a = a positive real number) determined by a depth $T_I$ of a time-axis interleave, wherein the depth of the time-axis interleave represents a degree by which mutually adjacent transmission data items in a bit stream before the time-axis interleave are separated from each other on a time axis after the interleave.

20. The OFDM apparatus according to any one of claims 17, 18 and 19, characterized in that said transmission output characteristic control means displaces a transmission output frequency of the OFDM transmission signal from a reference frequency of a transmission channel by a predetermined amount.

21. The OFDM apparatus according to claim 20, characterized in that said transmission output characteristic control means displaces an oscillation frequency of a local oscillator for frequency conversion of the OFDM transmission signal from the reference frequency by a predetermined amount.

22. The OFDM apparatus according to any one of claims 17, 18 and 19, characterized in that said transmission output characteristic control means temporally varies a transmission output frequency of the OFDM transmission signal.

23. The OFDM apparatus according to claim 22, characterized in that in said transmission output characteristic control means, a frequency modulator is provided on a transmission passage of the OFDM transmission signals, and the frequency modulator frequency-modulates the transmission signals on the basis of a predetermined time function.

24. The OFDM apparatus according to claim 22, characterized in that said transmission output characteristic control means frequency-modulates, on the basis of a predetermined time function, a local oscillation signal for transmission frequency conversion of the OFDM transmission signal.

25. The OFDM apparatus according to any one of claims 17, 18 and 19, characterized in that said transmission output characteristic control means temporally varies a phase of the OFDM transmission signal.

26. The OFDM apparatus according to claim 25, characterized in that in said transmission output characteristic control means, a phase modulator is provided on a transmission passage of the OFDM transmission signal, and the phase modulator phase-modulates the transmission signal on the basis of a predetermined time function.

27. The OFDM apparatus according to claim 25, characterized in that said transmission output characteristic control means phase-modulates, on the basis of a predetermined time function, a local oscillation signal for transmission frequency conversion of the OFDM transmission signal.

28. The OFDM apparatus according to any one of claims 17, 18 and 19, characterized in that said transmission output characteristic control means temporally varies transmission delay time differences between the OFDM transmission signals from.

29. The OFDM apparatus according to claim 28, characterized in that in said transmission output characteristic control means, a delay circuit is provided on a transmission passage of the OFDM transmission signals, and a delay amount of the delay circuit is varied on the basis of time functions different from each other.

30. A TV material information transmission apparatus characterized by comprising:

   OFDM modulation means for modulating TV material information to OFDM signals by an orthogonal frequency division multiplex (OFDM) method;
   a plurality of OFDM transmission means for transmitting the OFDM signals independently in the same channel at the same time; and
   transmission output characteristic control means for controlling transmission output characteristics of at least one of the OFDM transmission means, such that frequency characteristics of a synthesized electric field at a given point within a transmission area of the plurality of OFDM transmission means vary with the passing of time.

31. A wireless TV camera characterized by comprising:

   OFDM modulation means for modulating acquired TV signals to OFDM signals by an orthogonal frequency division multiplex (OFDM) method;
   a plurality of OFDM transmission means for transmitting the OFDM signals independently in the same channel at the same time; and
   transmission output characteristic control means for controlling transmission output characteristics of at least one of the OFDM transmission means, such that frequency characteristics of a synthesized electric field at a given point within a transmission area of the plurality of OFDM transmission means vary with the passing of time.

**F I G. 1**

FREQUENCY

**F I G. 2**

FREQUENCY

**F I G. 3**

FREQUENCY

SERVICE AREA

A

# F I G. 4

F I G. 5A

F I G. 5B

F I G. 6A

F I G. 6B

F I G. 8A

F I G. 8B

F I G. 7

F I G. 9

EP 0 823 794 A1

F I G. 10A

F I G. 10B

F I G. 12A

F I G. 12B

FIG. 11

FIG. 13

11 ENCODER

12
121 ERROR CORRECTION CODER
122 TIME/ FREQUENCY INTERLEAVER
123 OFDM MODULATION (IFFT)
124 D/A
125 LOW-PASS FILTER

181 DISPERSIVE DELAY CIRCUIT
BASEBAND SIGNAL

13
131 ORTHOGONAL MODULATOR
132 IF LOCAL OSCILLATOR
182 DISPERSIVE DELAY CIRCUIT
INTERMEDIATE FREQUENCY SIGNAL

14
141 FREQUENCY MODULATOR
142 RF LOCAL OSCILLATOR
143 BAND FILTER
144 RF AMPLIFIER
183 DISPERSIVE DELAY CIRCUIT
SIGNAL TRANSMISSION

15

21

INPUT DATA → ENCODER ⌐21

ERROR CORRECTION CODER 221 → TIME/ FREQUENCY INTERLEAVER 222 → OFDM MODULATION (IFFT) 223 → D/A 224 → LOW-PASS FILTER 225

22

BASEBAND SIGNAL

231

24

251   254   25A

ORTHOGONAL MODULATOR

IF SIGNAL DISTRIBUTOR

FREQUENCY MODULATOR

BAND FILTER

25B

IF LOCAL OSCILLATOR

INTERMEDIATE FREQUENCY SIGNAL

FREQUENCY MODULATOR ⌐253

255

232

RF LOCAL OSCILLATOR ⌐252

INTERMEDIATE FREQUENCY PROCESSOR

23

25C

TRANSMISSION SIGNAL

TRANSMISSION SIGNAL

TRANSMISSION SIGNAL

26A

26B

26C

F I G. 14

## INTERNATIONAL SEARCH REPORT

International application No.

PCT/JP97/00033

### A. CLASSIFICATION OF SUBJECT MATTER

Int. Cl$^6$  H04B7/04, H04H3/00, H04J11/00, H04L27/00

According to International Patent Classification (IPC) or to both national classification and IPC

### B. FIELDS SEARCHED

Minimum documentation searched (classification system followed by classification symbols)

Int. Cl$^6$  H04B7/04, H04H3/00, H04J11/00, H04L27/00

Documentation searched other than minimum documentation to the extent that such documents are included in the fields searched

| | |
|---|---|
| Jitsuyo Shinan Koho | 1926 – 1997 |
| Kokai Jitsuyo Shinan Koho | 1971 – 1997 |
| Toroku Jitsuyo Shinan Koho | 1994 – 1997 |

Electronic data base consulted during the international search (name of data base and, where practicable, search terms used)

PATOLIS

### C. DOCUMENTS CONSIDERED TO BE RELEVANT

| Category* | Citation of document, with indication, where appropriate, of the relevant passages | Relevant to claim No. |
|---|---|---|
| Y | JP, 7-283806, A (Nippon Hoso Kyokai), October 27, 1995 (27. 10. 95)(Family: none) | 1 – 31 |
| Y | JP, 54-7204, A (Nippon Telegraph & Telephone Corp.), January 19, 1979 (19. 01. 79) & US, 4223405, A | 1 – 31 |
| Y | JP, 7-274142, A (Nippon Hoso Kyokai), October 20, 1995 (20. 10. 95)(Family: none) | 4, 5, 30, 31 |
| Y | JP, 51-43001, A (Nippon Telegraph & Telephone Corp.), April 13, 1976 (13. 04. 76) & US, 4032846, A | 7, 21 |
| Y | JP, 7-38477, A (NEC Corp.), February 7, 1995 (07. 02. 95)(Family: none) | 9, 10, 22, 23 |
| Y | JP, 53-117302, A (NEC Corp.), October 13, 1978 (13. 10. 78)(Family: none) | 12 – 14 25 – 28 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| April 8, 1997 (08. 04. 97) | April 22, 1997 (22. 04. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP97/00033 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 58-15341, A (NEC Corp.),<br>January 28, 1983 (28. 01. 83)(Family: none) | 15, 16, 29 |

Form PCT/ISA/210 (continuation of second sheet) (July 1992)